# EUROPEAN PATENT APPLICATION

(11) **EP 1 659 442 A1**
(43) Date of publication of application: **24.05.2006**
(21) Application number: 05025234.5
(22) Date of filing: 18.11.2005
(51) Int. Cl.: G02F 1/13357

(54) **Backlight unit**

(30) Priority: 18.11.2004 KR 2004094688
(71) Applicant: LG Electronics Inc., Yongdungpo-gu Seoul (KR)
(72) Inventor: Lee Sang Gon, Heungduk-gu Chungji-si Choongchungbuk-do (KR); Choi Yun Ho, Youngdungpo-gu Seoul (KR); Hong Bong Taek, Heungduk-gu,Chungju-si Choongchungbuk-do (KR); Lee Jung Hoon, Heungduk-gu,Chingju-si Choongchungbuk-do (KR); Kim Kang Yoon, Heungduk-gu,Chungju-si Choongchungbuk-do (KR); Lee Ung Sang, Chungji-si, Choongchungbuk-do (KR); Kim Chang Jong, Choongchungbuk-do (KR); Lee Seoung Ho, dong, Kimposi Kyoungki-do (KR); Kab Jin Hwang, Sangdang-gu Chungji-si Choongchungbuk-do (KR)
(74) Representative: von Hellfeld, Axel

(57) **Abstract**

A backlight unit capable of enhancing a luminance of an LCD is provided. The backlight unit includes a lamp for emitting light, a light guide plate for guiding the light emitted from the lamp, and an optical sheet disposed on a path of the light emitted from the light guide plate. The optical sheet includes a prism sheet (500) having a plurality of prisms of which apex angles are obtuse, and a reflective polarizer film (530) for reflecting and transmitting the light emitted from the prism sheet (500) according to polarization components.

## Description

### BACKGROUND OF THE INVENTION

### Field of the Invention

The present invention relates to a backlight unit of a liquid crystal display (LCD).

### Description of the Related Art

Recently, to replace heavy and bulky cathode ray tube (CRTs), various kinds of flat panel displays have been developed.

Examples of the flat panel displays are a liquid crystal display (LCD), a field emission display (FED), a plasma display panel (PDP), an electro-luminescence display (ELD), and so on. Many attempts have been made to provide an enhanced display quality and large screen of the flat panel displays.

Among the flat panel displays, the LCD is a non-luminous display device that displays an image using a light source such as a lamp.

The LCD has advantages of a small size, lightweight, and low power consumption. The LCD displays an image using electrical and optical properties of liquid crystals injected inside a liquid crystal panel.

Unlike the CRT, the liquid crystals injected between a thin film transistor (TFT) substrate and a color filter substrate are not a light emitting material that emits light by itself, but a light receiving material that emits light by controlling an amount of an external light. Therefore, the LCD requires a backlight unit that irradiates light onto the liquid crystal panel.

The backlight unit includes a mold frame with a receiving space, a reflection sheet disposed in a base of the receiving space to reflect the light toward the liquid crystal panel, a light guide plate disposed on the reflection sheet to guide the light, a lamp unit disposed between the light guide plate and a sidewall of the receiving space to emit the light, optical sheets stacked on the light guide plate to diffuse and condense the light, and a top chassis disposed on the mold frame to cover from an edge portion of the liquid crystal panel to a side of the mold frame.

In addition, top and bottom polarizers are respectively disposed in top and bottom of the liquid crystal panel to transmit a specific polarized light of an incident light. The light from the top polarizer and the light from the polarizer have a phase difference of 90° from each other.

The optical sheets include a diffusion sheet, a prism sheet, and a protection sheet. The diffusion sheet diffuses the light, and a prism sheet is disposed on the diffusion sheet to condense the diffused light and transmit it to the liquid crystal panel. The protection sheet protects the diffusion sheet and the prism sheet.

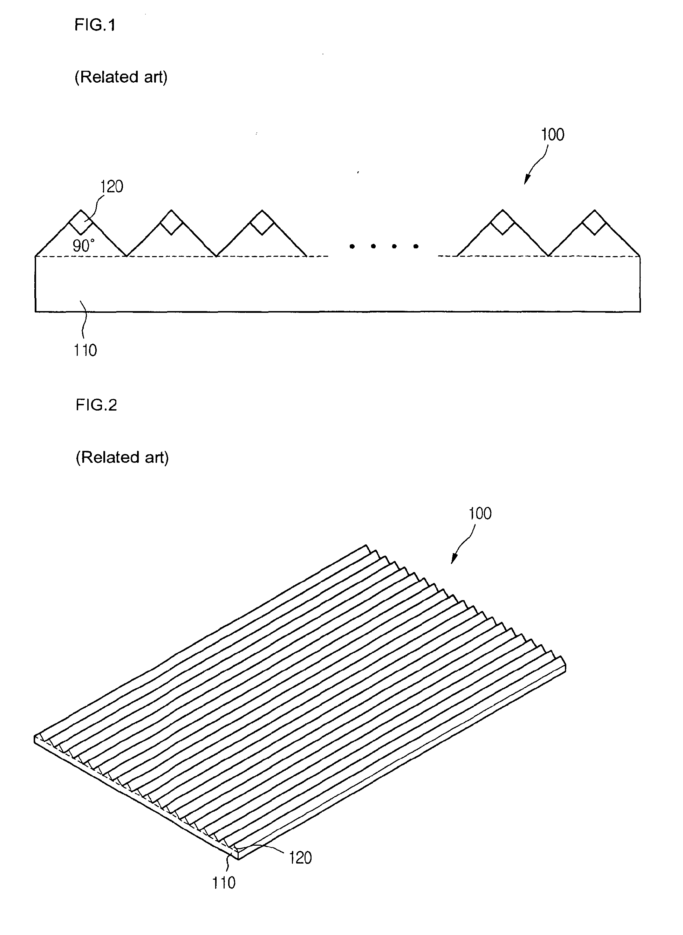

FIGs. 1 and 2 are a sectional view and a perspective view of a prism sheet of a backlight unit in a related art LCD, respectively.

Referring to FIGs. 1 and 2, a related art prism sheet 100 includes a body 110 on which a light diffused by a light guide plate and a diffusion sheet is initially incident, and a plurality of prisms 120 having an apex angle of 90° to make the diffused light travel in a constant direction. The prisms 120 are linearly arranged on the body 110 in a stripe shape.

In such an LCD, when the light emitted from a lamp unit is incident on a liquid crystal panel, an intensity of the emitted light is attenuated while passing through the light guide plate and optical sheets. Therefore, a luminance of an image actually displayed on a screen is reduced to one several hundredth of a luminance of an initial light source.

That is, the related art backlight unit cannot meet a recent tendency that demands high-luminance display devices.

To meet the recent tendency, a thin multi-layer reflective polarizer film is used as a protection sheet that is disposed on the prism sheet 100 of FIGs. 1 and 2.

The thin multi-layer reflective polarizer film transmits a specific polarized light among the light passing through the prism sheet 100, and reflects the other polarized light so that it is converted into a specific polarized light in the prism sheet 100. Then, the converted specific polarized light passes through the thin multi-layer reflective polarizer film, thus increasing an amount of light passing through a bottom polarizer.

At this point, the specific polarized light is a polarized light passing through the bottom polarizer and may be a longitudinal wave (P wave) or a transverse wave (S wave). In contrast to the specific polarized light, the other polarized wave may be a transverse wave (S wave) and a longitudinal wave (S wave).

In this manner, the related art backlight unit reuses the discarded polarized light to thereby enhance a whole luminance.

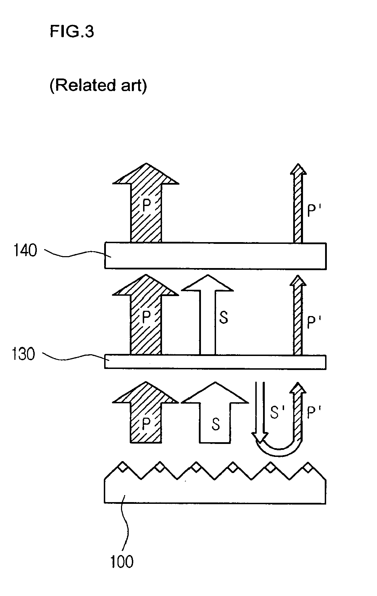

However, because the related art prism sheet has a prism apex angle of 90°, if most of the light emitted from the prism sheet is vertically incident on the thin multi-layer reflective polarizer film, there occurs a problem that transmits a large amount of a polarized light that has to be reflected from the thin multi-layer reflective polarizer film. This problem will be described below in detail with reference to FIG. 3.

FIG. 3 is a sectional view illustrating light transmission/reflection states of a specific region of the backlight unit using the thin multi-layer reflective polarizer film.

In FIG. 3, only the prism sheet 100, the thin multi-layer reflective polarizer film 130, and the bottom polarizer 140 are illustrated.

The prism sheet 100 disposed under the thin multi-layer reflective polarizer film 130 has a prism apex angle of 90° as illustrated in FIGs. 1 and 2. Also, it will be assumed that the polarized light passing through the bottom polarizer 140 is a longitudinal wave (P wave).

Referring to FIG. 3, most of the light passing through the prism sheet 100 is vertically incident on the thin multi-layer reflective polarizer film 130.

That is, although all of the light passing through the prism sheet 100 is not vertically incident on the thin multi-layer reflective polarizer film 130, most of the light is vertically incident when the prism apex angle is 90°.

As illustrated in FIG. 3, when the light is vertically incident on the thin multi-layer reflective polarizer film 130, the longitudinal wave of the two waves (P wave and S wave) is transmitted. In addition, a large amount of the transverse wave is transmitted.

Since the transmitted transverse wave cannot pass through the bottom polarizer 140 of the liquid crystal panel, the luminance is reduced as much as an amount of the transmitted transverse wave.

Further, in this case, an amount of the reflected transverse wave S' is small and an amount of a longitudinal wave P' to be reused is also reduced as much. Consequently, it does not greatly influence on the enhancement of the luminance.

### SUMMARY OF THE INVENTION

Accordingly, the present invention is directed to a backlight unit that substantially obviates one or more problems due to limitations and disadvantages of the related art.

An object of the present invention is to provide a backlight unit of an LCD, capable of enhancing an image displayed on a screen. The backlight unit increases a transmittance of a specific polarized light (e.g., a longitudinal wave (P wave)) and a reflectivity of another polarized light (e.g., a transverse light (S wave)) by making light incident on a reflective polarizer film at a predetermined angle, not a right angle, thereby increasing an amount of light reused in the backlight unit.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a backlight unit including: a lamp for emitting light; a light guide plate for guiding the light emitted from the lamp; and an optical sheet disposed on a path of the light emitted from the light guide plate, the optical sheet including: a prism sheet having a plurality of prisms of which apex angles are obtuse; and a reflective polarizer film for simultaneously reflecting and transmitting the light emitted from the prism sheet according to polarization components.

In another aspect of the present invention, there is provided a display device including: a light source; an LCD panel; a prism sheet disposed between the light source and the LCD panel, the prism sheet having a surface provided with a linear array of prisms; and a reflective polarizer film disposed between the prism sheet and the LCD panel, wherein a prism apex angle is greater than 90° and less than or equal to 110°.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIGs. 1 and 2 are a sectional view and a perspective view of a prism sheet of a backlight unit in a related art LCD;

FIG. 3 is a sectional view illustrating an operation of a prism sheet and a thin multi-layer reflective polarizer film according to the related art;

FIG. 4 is a sectional view of an LCD with a backlight unit according to an embodiment of the present invention;

FIG. 5 is a graph of a surface reflection with respect to an angle of incidence on a reflective polarizer film in a backlight unit according to the embodiment of the present invention;

FIG. 6 is a sectional view illustrating light transmission/reflection states of a specific region of the backlight unit using a luminance enhancement film according to an embodiment of the present invention; and

FIG. 7 is a graph of a luminance distribution with respect to a prism apex angle according to an embodiment of the present invention, in case where only a prism sheet is applied to the backlight unit and in case where a prism sheet and a reflective polarizer film are applied thereto.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

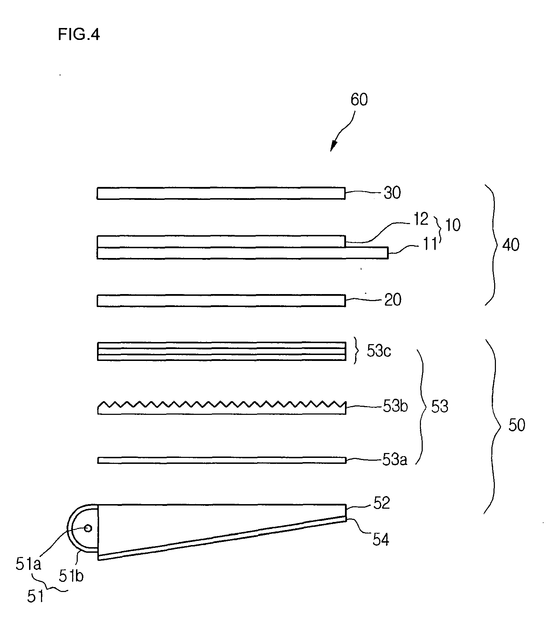

FIG.4 is a sectional view of an LCD with a backlight unit according to an embodiment of the present invention.

Referring to FIG. 4, an LCD 60 according to an embodiment of the present invention includes a backlight unit 50 for emitting light, and a display unit 40 for displaying an image using the emitted light.

The backlight unit 50 is provided with a lamp unit 51 for emitting the light, and a light guide unit for guiding the light from the lamp unit 51 toward a liquid crystal panel 10.

The display unit 40 is provided with the liquid crystal panel 10, a top polarizer 30 disposed above the liquid crystal panel 10, and a bottom polarizer 20 disposed under the liquid crystal panel 10.

The liquid crystal panel 10 includes a TFT substrate 11 on which electrodes are formed, a color filter 12, and a liquid crystal layer (not shown) interposed between the TFT substrate 11 and the color filter substrate 12.

Specifically, the lamp unit 51 includes a lamp 51a for emitting the light, and a lamp reflector 51b surrounding the lamp 51a. The light emitted from the lamp 51a is incident on a light guide plate 52, which will be described later. The lamp reflector 51b reflects the emitted light toward the light guide plate 52 to thereby increase an amount of light incident on the light guide plate 52.

The light guide plate 52 is disposed on one side of the lamp unit 51 and guides the light emitted from the lamp unit 51. At this point, the light guide plate 52 changes a path of the light emitted from the lamp unit 51 and guides it toward the liquid crystal panel 10.

Further, a reflection plate 54 is disposed under the light guide plate 52. Light leaking out from the light guide plate 52 is again reflected toward the light guide plate 52 by the reflection plate 54.

The light guide unit includes the reflection plate 54, the light guide plate 52, and a plurality of optical sheets 53.

The optical sheets 53 are disposed above the light guide plate 52 to enhance the efficiency of the light emitted from the light guide plate 52. Specifically, the optical sheets 53 include a diffusion sheet 53a, a prism sheet 53b, and a reflective polarizer film 53c, which are sequentially stacked on the light guide plate 52.

The diffusion sheet 53a scatters the light incident from the light guide plate 52 and thus makes uniform luminance distribution. A plurality of triangular prisms are formed in parallel on the prism sheet 53b.

In this embodiment, the prism sheet 53b allows the light diffused by the diffusion sheet 53a to have a specific incident angle with respect to the reflective polarizer film 53c.

Although the prisms of the prism sheet 53b face the reflective polarizer film 53c in FIG. 4, they can also face the light guide plate 52.

That is, the light passing through the prism sheet 53b is incident on the reflective polarizer film 53c at a predetermined angle.

For this purpose, the prism sheet 53b has isosceles prisms, whose apex angle is not right but obtuse, arranged in a stripe shape.

The obtuse angle (α) is 90°<α≤110°, most preferably 92≤α≤97°.

Also, the reflective polarizer film 53c disposed above the prism sheet 53b transmits a specific polarized light passing through the bottom polarizer 20 among the light passing through the prism sheet 53b, and reflects the other polarized light so that it is converted into a specific polarized light and then transmitted.

At this point, the specific polarized light is a polarized light passing through the bottom polarizer 20 and may be a longitudinal wave (P wave) or a transverse wave (S wave). In contrast to the specific polarized light, the other polarized wave may be a transverse wave (S wave) and a longitudinal wave (S wave).

The reflective polarizer film 53c may be a thin multi-layer reflective polarizer film or a diffusion reflective polarizer film.

The thin multi-layer reflective polarizer film includes a plurality of layers with different refractive indexes and transmits and reflects simultaneously according to its polarization. The thin multi-layer reflective polarizer film includes an additional diffusion layer on at least one side of the thin multi-layer reflective polarizer film.

The use of the thin multi-layer reflective polarizer film or the diffusion reflective polarizer film enhances the luminance by 40-70%.

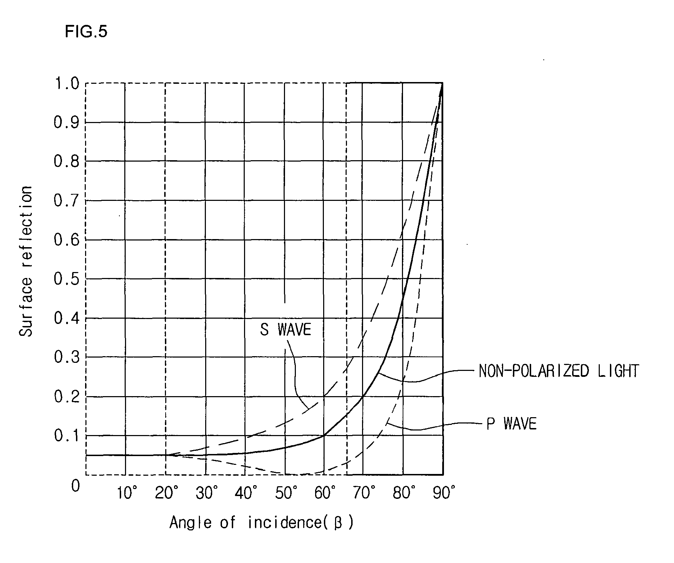

In this embodiment, the incident angle (p) of light on the reflective polarizer film 53c is 20°<β<65°, preferably 20°<β<55°. This will be described in detail with reference to FIG. 5.

FIG. 5 is a graph of a surface reflection with respect to the angle of incidence on the reflective polarizer film in the backlight unit according to the embodiment of the present invention.

As illustrated in FIG. 5, when the incident angle (β) of the light on the reflective polarizer film 53c is 0°<β<20°, both of the longitudinal wave (P wave) and the transverse wave (S wave) have a low reflectivity so that most of them are transmitted.

On the contrary, when the incident angle of the light incident on the reflective polarizer film 53c is 20°<β<65°, the longitudinal wave (P wave) has the reflectivity of almost zero so that most of the longitudinal wave is transmitted, and the transverse wave has the reflectivity of 0.1 to 0.3 so that a large amount of the transverse wave is reflected.

That is, when the incident angle of the light on the reflective polarizer film 53c is 20°<β<65°, specifically 20°< β<55°, the longitudinal wave (P wave) is transmitted and the transverse wave (S wave) is reflected, thereby taking full advantage of the above-described reflective polarizer film 53c.

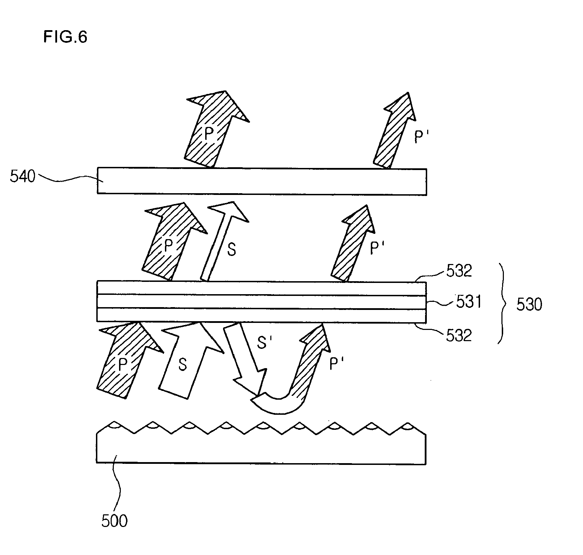

FIG. 6 is a sectional view illustrating light transmission/reflection states of a specific region of the backlight unit using a luminance enhancement film according to an embodiment of the present invention.

In FIG. 6, only the prism sheet 500, the reflective polarizer film 530, and the bottom polarizer 540 are illustrated. As described above with reference to FIG. 3, the apex angle of the prism sheet 500 disposed under the reflective polarizer film 530 is obtuse.

Also, the reflective polarizer film 530 may be a thin multi-layer reflective polarizer film or a diffusion reflective polarizer film.

Hereinafter, it will be assumed that the polarized light passing through the bottom polarizer 540 is the longitudinal wave (P wave).

Referring to FIG. 6, the light passing through the prism sheet 500 is incident on the reflective polarizer film 530 at a predetermined angle, not a right angle. The predetermined angle is in a range from 20° to 65°.

When the light is incident on the reflective polarizer film 530 at the predetermined angle, most of the longitudinal wave passes through the reflective polarizer film 530, while most of the transverse wave is reflected from the reflective polarizer film 530.

In FIG. 6, the thin multi-layer reflective polarizer film is exemplarily illustrated as the reflective polarizer film 530. The thin multi-layer reflective polarizer film includes diffusion films 532 disposed on both sides of the multi-layer reflective polarizer film 531.

Meanwhile, the diffusion films 532 make the light be incident on the thin multi-layer reflective polarizer film 531 at a more inclined angle and thus increase the P-wave transmission efficiency and S-wave reflection efficiency of the reflective polarizer film 530.

Like this, the transverse wave (S' wave) reflected from the reflective polarizer film 530 is again reflected by the prism sheet 500 and converted into the longitudinal wave (P' wave), and then again passes through the reflective polarizer film 530. Finally, compared with the related art, a larger amount of the longitudinal wave (P' wave) passes through the reflective polarizer film 530.

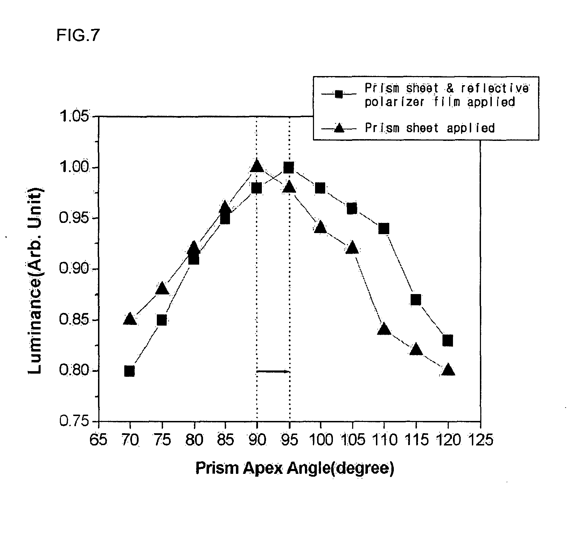

FIG. 7 is a graph of a luminance distribution with respect to a prism apex angle according to an embodiment of the present invention, in case where only the prism sheet is applied and in case where the prism sheet and the reflective polarizer film are applied.

In FIG. 7, a maximum luminance when only the prism sheet is applied is assigned as "1", and a maximum luminance when the prism sheet and the reflective polarizer film are applied is assigned as "1".

Referring to FIG. 7, when only the prism sheet is applied, the maximum luminance is obtained the prism apex angle of 90°. Meanwhile, when the prism sheet and the reflective polarizer film are applied, the maximum luminance is obtained at the prism apex angle of 95°.

The obtuse angel (α) is 90°<α≤110°, preferably 92°≤α≤97°.

By making the backlight unit have the obtuse prism apex angle, the transmittance and reflectivity can be enhanced.

It will be apparent to those skilled in the art that various modifications and variations can be made in the present invention. Thus, it is intended that the present invention covers the modifications and variations of this invention provided they come within the scope of the appended claims and their equivalent.

## Claims

1. A backlight unit comprising:
a lamp for emitting light;
a light guide plate for guiding the light emitted from the lamp; and
an optical sheet disposed on a path of the light emitted from the light guide plate, the optical sheet including:
a prism sheet having a plurality of prisms of which apex angles are obtuse; and
a reflective polarizer film for reflecting and transmitting the light emitted from the prism sheet according to polarization components.

2. The backlight unit according to claim 1, wherein the apex angles of the prisms are greater than 90° and less than or equal to 110°.

3. The backlight unit according to claim 1, wherein the apex angles of the prisms are greater than or equal to 92° and less than or equal to 97°.

4. The backlight unit according to claim 1, wherein the reflective polarizer film is a thin multi-layer reflective polarizer film having a plurality of layers with different reflective indexes.

5. The backlight unit according to claim 4, wherein the thin multi-layer reflective polarizer further includes a diffusion layer on at least one side thereof.

6. The backlight unit according to claim 1, wherein the prism sheet includes a body and a prism, the prism being disposed to face the light guide plate.

7. The backlight unit according to claim 1, wherein the prism sheet includes a body and a prism, the prism being disposed to face the reflective polarizer film.

8. A display device comprising:
a light source;
an LCD (liquid crystal display) panel;
a prism sheet disposed between the light source and the LCD panel, the prism sheet having a surface provided with a linear array of prisms; and
a reflective polarizer film disposed between the prism sheet and the LCD panel,
wherein a prism apex angle is greater than 90° and less than or equal to 110°.

9. The display device according to claim 8, wherein the prism apex angle is greater than or equal to 92° and less than or equal to 97°.

10. The display device according to claim 8, wherein the reflective polarizer film is a thin multi-layer reflective polarizer film having a plurality of layers with different reflective indexes.

11. The display device according to claim 4, wherein the thin multi-layer reflective polarizer further includes a diffusion layer on at least one side thereof.
